# EUROPÄISCHE PATENTSCHRIFT

(11) **EP 0 547 469 B1**
(45) Veröffentlichungstag und Bekanntmachung des Hinweises auf die Patenterteilung: **08.03.1995**
(21) Anmeldenummer: 92120863.3
(22) Anmeldetag: 07.12.1992
(51) Int. Cl.: F16F 7/10, F16F 13/00, F16F 1/32

(54) **Aktives, elastisches Lager**
Active, elastic support
Support élastique actif

(30) Priorität: 17.12.1991 DE 4141637
(43) Veröffentlichungstag der Anmeldung: 23.06.1993
(73) Patentinhaber: METZELER GIMETALL AG, D-80992 München (DE)
(72) Erfinder: Gugsch, Mathias, Dipl.-Ing., W-8000 München 40 (DE); Langof, Rudolf, Dipl.-Ing., W-8061 Ampermoching (DE); Indlekofer, Peter, W-8384 Simbach (DE)
(74) Vertreter: Preissner, Nicolaus, Dipl.-Ing.

(56) Entgegenhaltungen:
- EP-A- 0 336 789
- DE-A- 4 021 035
- DE-A- 4 021 039
- FR-A- 2 348 058
- US-A- 3 648 999

## Beschreibung

Die Erfindung bezieht sich auf ein aktives, elastisches Lager zur isolierenden Lagerung eines schwingungsbehafteten Aggregats, insbesondere einer Verbrennungskraftmaschine in einem Kraftfahrzeug, mit einem aktiven Entkopplungssystem mit Tilgermasse für hochfrequente Schwingungen, das in Abhängigkeit vorgegebener Betriebsparameter, die von einem Sensor erfaßbar sind, elektrodynamisch in Schwingungen versetzbar ist.

Ein solches Lager ist für hydraulisch gedämpfte Zweikammer-Motorlager bereits in der prioritätsälteren Anmeldung P 40 21 039.1 und für reine Gummilager in der älteren Anmeldung P 40 21 035.9 vorgeschlagen worden. Ein solches Motorlager hat bei hydraulisch gedämpften Lagern den Vorteil, daß es ein Entkopplungssystem aufweist, das unabhängig von hohen Flüssigkeitsdrücken im Motorlager eine sichere Entkopplung hochfrequenter Schwingungen bewirkt und das darüberhinaus bei einem Ausfall dieses Entkopplungssystems nicht die prinzipielle Funktionstüchtigkeit des Motorlagers als Dämpfungsglied für niedere Frequenzen in Frage stellt.

Eine solche Ankopplung von Tilgermasse und Spule an eine einzige Membran kann jedoch mit mechanischen Problemen einer begrenzten Haltbarkeit einer solchen Membran und einer nachlassenden Rückstellkraft verbunden sein. Insbesondere ergeben sich Schwierigkeiten bei einer schrägen Einleitung von Kräften und einer nicht exakten Vertikalführung der Spule für die Funktionsfähigkeit des Entkopplungssystems.

Der vorliegenden Erfindung liegt daher die Aufgabe zugrunde, eine Anordnung und einen Aufbau für die beweglichen Teile eines solches Entkopplungssystems anzugeben, das mechanisch sehr viel stabiler und ermüdungsfreier ist, mit dem auch größere Tilgermassen sicher beherrscht werden können und mit der eine exaktere Führung von Spule und Tilgermasse unter gleichzeitiger Aufnahme von Querkräften ermöglicht ist.

Zur Lösung dieser Aufgabe ist erfindungsgemäß vorgesehen, daß das Entkopplungssystem auf der isolierten Seite des Lagers angeordnet ist und eine, in einem permanenten Magnetfeld schwingende Spule aufweist, an der die Tilgermasse angekoppelt ist, und daß zur exakten Vertikalführung der Spule diese über zwei, quer zur Spule verlaufenden und untereinander parallelen , radialsteifen Federsystemen elastisch aufgehängt ist.

Dabei kann die Tilgermasse unmittelbar an die Spule anschließend angeordnet sein, wobei die eine vertikale und eine radiale Erstreckung aufweisende Tilgermasse in zwei, voneinander beabstandeten Ebenen von je einem, eine vertikale Bewegung zulassenden Federsystem umschlossen ist, welche Federsysteme an einem starren Widerlager des Entkopplungssystems abgestützt sind.

Mit derartigen, axial beabstandeten, aber exakt parallel verlaufenden Federsystemen sind somit eine genaue Führung von Tilgermasse und Spule sicher gewährleistet, um damit insbesondere ein Verkanten der Spule und ein nicht exaktes Eintauchen in das Magnetfeld sicher zu vermeiden. Eine solche Doppelführung ist insbesondere auch deshalb zweckmäßig, weil damit in Kraftfahrzeugen auftretende Querbeschleunigungen und Querkräfte sicher beherrscht werden können.

Dabei können die beiden Federsysteme aus Ringfedern oder aus in radialer Richtung steifen Membranen bestehen.

Die Tilgermasse mit zweckmäßigerweise prismatischem oder zylindrischen Querschnitt sollte dabei am oberen und am unteren Ende von den Ringfedern dicht umschlossen sein.

Zweckmäßig ist es, wenn die Ringfedern aus zwei angenähert konzentrisch zueinander verlaufenden Federringen bestehen, die auf einem Durchmesser über radiale Stege miteinander verbunden sind, wobei die inneren Federringe an der Tilgermasse festgelegt und die äußeren Federringe um 90° zu den radialen Stegen versetzt Halterungsösen zur Aufnahme der Abstützungen zum Widerlager aufweisen.

Dabei können die Radienmittelpunkte der beiden außenliegenden Federringhälften geringfügig außerhalb des Mittelpunktes des inneren Federringes liegen, um damit eine größere Beweglichkeit zu ermöglichen.

Besonders zweckmäßig ist es, wenn die beiden Ringfedern bezüglich ihrer Abstützungen um 90° zueinander versetzt angeordnet sind, da damit eine sichere vertikale Führung der Tilgermasse gewährleistet ist.

Zusätzlich kann die Tilgermasse auf ihrer oberen Stirnseite eine balkenförmige Zusatzmasse tragen, die die Tilgermasse seitlich überragt, wobei die Zusatzmasse auf der Unterseite der überragenden Enden mit Gummipolstern als Bewegungsanschlag gegen die Oberseite des starren Widerlagers versehen ist.

Anhand einer schematischen Zeichnung sind Aufbau und Funktionsweise eines Ausführungsbeispiels nach der Erfindung näher erläutert. Dabei zeigen:
- Fig. 1: einen Längsschnitt durch ein solches aktives Lager mit externem Entkopplungssystem,
- Fig. 2: einen Querschnitt durch das Entkopplungssystem entsprechend der Schnittlinie II-II nach Fig. 1 und
- Fig. 3: einen Querschnitt durch das Entkopplungssystem entsprechend der Schnittlinie III-III.

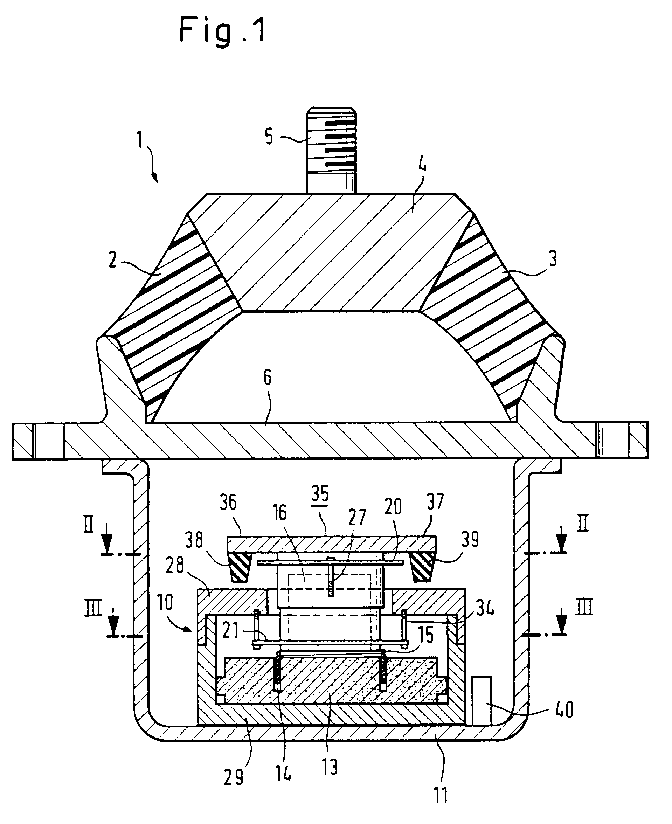

Wie man aus Fig. 1 ersieht, kann ein solches Lager aus einem Keillager 1 mit den beiden schräg zueinander angestellten Gummikörpern 2 und 3 mit einer oberen, zentralen Lagerplatte 4 und Bolzen 5 zum Festlegen eines nicht näher dargestellten Motors bestehen, wobei sich die beiden Gummikörper 2 und 3 auf einem karosserieseitigen Träger 6 abstützen.

In gleicher Weise kann aber statt eins reinen Gummilagers 1 auch ein hydraulisch gedämpftes Lager zur Anwendung kommen.

Um nun hochfrequente Schwingungen optimal entkoppeln zu können, ist ein zusätzliches Entkopplungssystem 10 außerhalb des eigentlichen Traglagers 1 und auf der isolierten Karosserieseite des Lagers vorgesehen. Im dargestellten Ausführungsbeispiel ist dieses Entkopplungssystem 10 über ein topfförmiges Gehäuse 11 unmittelbar an den Träger 6 angeflanscht, wobei aber auch eine Anordnung an anderer Stelle des Trägers 6 oder in Beziehung zu diesem möglich ist.

In dem topfförmigen Gehäuse 11 ist ein Permanentmagnet 13 mit einem Ringspalt 14 auf seiner Oberseite angeordnet, in welchen Ringspalt 14 eine elektrische Spule 15 eintaucht. Unmittelbar an diese Spule 15 ist eine Tilgermasse 16 angeschlossen, die nach dem dargestellten Ausführungsbeispiel die Form eines Hohlzylinders aufweist, aber auch jede andere Form haben kann.

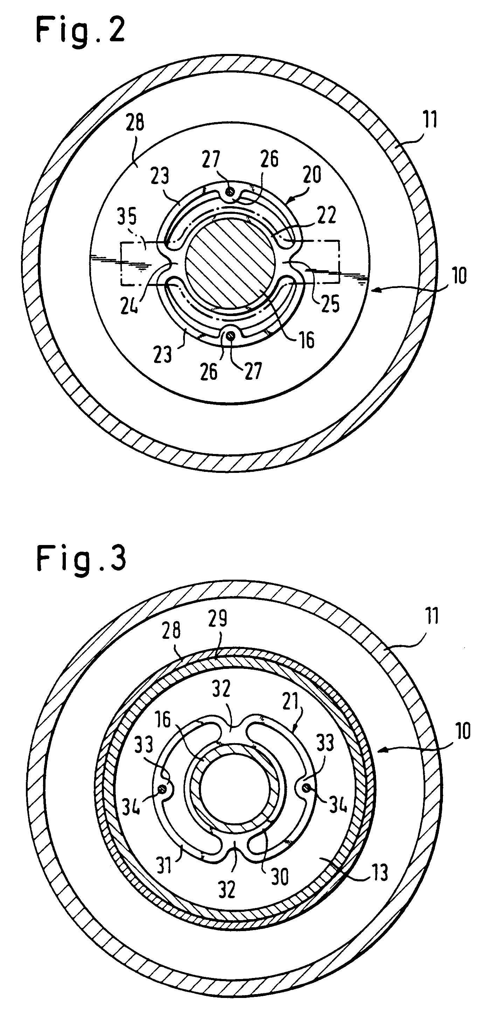

Diese Tilgermasse 16 mit der Spule 15 ist nunmehr - wie man das auch aus den Querschnitten nach Fig. 2 und 3 ersieht - auf folgende Weise axial federnd gelagert:

Die Tilgermasse 16 ist im Bereich des oberen und unteren Endes je von einer Ringfeder 20 und 21 umschlossen, die in Aufsicht in Fig. 2 und 3 näher dargestellt sind. Dabei besteht die Ringfeder 20 aus einem innenliegenden Federring 22, der die Tilgermasse 16 formschlüssig umschließt, sowie einem äußeren Federring 23, wobei beide Federringe 22 und 23 über radiale Stege 24 und 25, die jeweils auf einem Durchmesser liegen, miteinander verbunden sind. Die beiden außenliegenden Federringhälften 23 können dabei Radienmittelpunkte aufweisen, die geringfügig außerhalb des Mittelpunktes des inneren Federringes 22 liegen, so daß sie gewissermaßen nach außen ausgebeult sind. Versetzt um 90° zu den beiden radialen Stegen 24 und 25 weisen die äußeren Federringe 23 Halterungsösen 26 auf, von denen stabförmige Abstützungen, z.B. in Form von Schraubstiften 27, nach unten zu einem starren Widerlager 28 führen, das beispielsweise durch den Deckel des den Magneten umschließenden Gehäuses 29 gebildeten sein kann und etwa in mittlerer Höhe der Tilgermasse 16 verläuft.

Die untere Ringfeder 21 entsprechend Fig. 3 besteht ebenfalls aus einem innenliegenden Federring 30 und einem außenliegenden Federring 31, die über radiale Stege 32 miteinander verbunden sind. Hierbei ist diese untere Ringfeder 21 jedoch um 90° versetzt zur oberen Ringfeder 20 eingebaut, so daß die von den Halterungsösen 33 ausgehenden Halterungstifte 34 ebenfalls um 90° versetzt nach oben in die Unterseite der Halterungsplatte 28 eingeschraubt sind. Der innenliegende Federring 30 umschließt dabei den oberen Bereich der Spule 15 bzw. das untere Ende der Tilgermasse 16.

Durch diese Aufhängung von Spule und Tilgermasse und die Gestaltung der entsprechenden Ringfedern ist damit eine stabile Halterung und genaue axiale Führung der Tilgermasse 16 sicher gewährleistet.

Auf der Oberseite der Tilgermasse 16 kann darüberhinaus noch eine balkenförmige Zusatzmasse 35 angeordnet sein, die in Aufsicht in Fig. 2 strichpunktiert dargestellt ist. Diese Zusatzmasse 35 trägt auf der Unterseite ihrer beidseitig überstehenden Enden 36 und 37 je ein Gummipolster 38 und 39, die als Anschlag bei übergroßen axialen Bewegungen gegen die Oberseite des Widerlagers 28 wirken.

Zur Ansteuerung dieses Entkopplungssystems 10 ist in unmittelbarer Nähe ein nur schematisch angedeuteter Sensor 40 vorgesehen, der an eine nicht näher dargestellte Stromversorgung angeschlossen und über ebenfalls nicht näher dargestellte Verbindungsleitungen mit der Spule 15 des Entkopplungssystems verbunden ist. Dieser Sensor 40 kann ein Filter aufweisen, das nur hochfrequente Schwingungen von beispielsweise größer als 50 Hz auf der karosserieseitigen Lagerseite erfaßt und ein zu diesen Schwingbewegungen proportionales elektrisches Signal abgibt, um somit unter entsprechender Phasenverschiebung eine Gegenschwingung der Tilgermasse 16 zu erreichen und damit eine Tilgung hochfreqenter Schwingungen zu bewirken.

Anstelle der im Ausführungsbeispiel dargestellten Ringfedern ist es aber auch möglich, die Halterung von Spule und Tilgermasse durch zwei radialsteife Membranen vorzunehmen, die auf Ober- und Unterseite der Tilgermasse festgelegt und seitlich eingespannt sind.

Damit ist also ein wirksames externes Entkopplungssystem geschaffen, das mechanisch sehr stabil aufgebaut ist und eine optimale dynamische Entkopplung bei ganz bestimmten Frequenzen über den gesamten Funktionsbereich des Lagers bewirkt. Wegen der allein in Kraftfahrzeugen auftretenden und auf die Lager einwirkenden Querbeschleunigungen ist eine solche Doppelführung mit zwei parallelen Federsystemen besonders von Vorteil, um somit stets ein exaktes Eintauchen der Spule in den Magnetspalt sicherzustellen. Das zweite Federsystem nimmt dabei insbesondere die auftretenden Momente auf, da das Lager selbst nicht alle Querkräfte aufnehmen kann, so daß dadurch die Tilgermasse gegen diese Kräfte abgestützt wird.

## Patentansprüche

1. Aktives, elastisches Lager zur isolierenden Lagerung eines schwingungsbehafteten Aggregats, insbesondere einer Verbrennungskraftmaschine in einem Kraftfahrzeug, mit einem aktiven Entkopplungssystem mit Tilgermasse für hochfrequente Schwingungen, das in Abhängigkeit vorgegebener Betriebsparameter, die von einem Sensor erfaßbar sind, elektrodynamisch in Schwingungen versetzbar ist, dadurch gekennzeichnet, daß das Entkopplungssystem (10) auf der isolierten Seite des Lagers (1) angeordnet ist und eine, in einem permanenten Magnetfeld (13) schwingende Spule (15) aufweist, an die eine Tilgermasse (16) angekoppelt ist, und daß zur exakten Vertikalführung der Spule (15) diese über zwei, quer zur Spule (15) verlaufenden und untereinander parallelen, radialsteifen Federsystemen (20, 21) elastisch aufgehängt ist.

2. Lager nach Anspruch 1, dadurch gekennzeichnet, daß die Tilgermasse (16) unmittelbar an die Spule (15) anschließend angeordnet ist, wobei die eine vertikale und radiale Erstreckung aufweisende Tilgermasse (16) in zwei, voneinander beabstandeten Ebenen von je einem, eine vertikale Bewegung zulassenden Federsystem (20, 21) umschlossen ist, welche Federsysteme (20, 21) an einem starren Widerlager (28) des Entkopplungssystems (10) abgestützt sind.

3. Lager nach Anspruch 1 oder 2, dadurch gekennzeichnet, daß die Federsysteme aus Ringfedern (20, 21) bestehen.

4. Lager nach Anspruch 1 oder 2, dadurch gekennzeichnet, daß die Federsysteme aus in radialer Richtung steifen Membranen bestehen.

5. Lager nach Anspruch 2 oder 3, dadurch gekennzeichnet, daß die Tilgermasse (16) mit prismatischem oder zylindrischem Querschnitt am oberen und unteren Ende von den Ringfedern (20, 21) dicht umschlossen ist.

6. Lager nach Anspruch 3 und 5, dadurch gekennzeichnet, daß die Ringfedern (20, 21) aus zwei angenähert konzentrisch zueinander verlaufenden Federringen (22, 23; 30, 31) bestehen, die auf einem Durchmesser über radiale Stege (24, 25; 32) miteinander verbunden sind, wobei die inneren Federringe (22; 30) an der Tilgermasse (16) festgelegt und die äußeren Federringe (23; 31) um 90° zu den radialen Stegen (24, 25; 32) versetzte Halterungsösen (26; 33) zur Aufnahme der Abstützungen (27; 34) zum Widerlager (28) aufweisen.

7. Lager nach Anspruch 6, dadurch gekennzeichnet, daß die Radienmittelpunkte der beiden außenliegenden Federringhälften (23; 31) geringfügig außerhalb des Mittelpunktes der inneren Federringe (22; 30) liegen.

8. Lager nach Anspruch 6 oder 7, dadurch gekennzeichnet, daß die beiden Ringfedern (20, 21) bezüglich ihrer Abstützungen um 90° zueinander versetzt angeordnet sind.

9. Lager nach Anspruch 1, dadurch gekennzeichnet, daß die Tilgermasse (16) auf ihrer oberen Stirnseite eine balkenförmige Zusatzmasse (35) trägt, die die Tilgermasse (16) seitlich überragt, und daß die Zusatzmasse (35) auf der Unterseite der überragenden Enden (36, 37) mit Gummipolstern (38, 39) als Bewegungsanschlag gegen die Oberseite des Widerlagers (28) versehen ist.

10. Lager nach Anspruch 1, dadurch gekennzeichnet, daß der Permanentmagnet (13) auf seiner Oberseite einen Ringspalt (14) aufweist, in den die Spule (15) eintaucht.

## Claims

1. Active, elastic bearing for the mounting, in an insulating manner, of a vibrating assembly, in particular of a combustion engine in a motor vehicle, with an active isolating system with damping mass for high-frequency vibrations, which can be set to vibrate electrodynamically as a function of predetermined operating parameters which are detectable by a sensor, **characterised in that** the isolating system (10) is disposed on the insulated side of the bearing (1) and comprises a coil (15) vibrating in a permanent magnetic field (13) and to which a damping mass (16) is coupled, and that for the exact vertical guiding of the coil (15) the latter is elastically suspended by means of two radially rigid spring systems (20, 21) positioned transversely relative to the coil (15) and running parallel to one another.

2. Bearing according to claim 1, **characterised in that** the damping mass (16) is disposed so as to butt directly against the coil (15), wherein the damping mass (16) exhibiting a vertical and radial extension is surrounded in two mutually spaced planes in each case by a spring system (20, 21) permitting a vertical movement, which spring systems (20, 21) are supported on a rigid shoulder (28) of the isolating system (10).

3. Bearing according to claim 1 or 2, **characterised in that** the spring systems consist of annular springs (20, 21).

4. Bearing according to claim 1 or 2, **characterised in that** the spring systems consist of diaphragms rigid in a radial direction.

5. Bearing according to claim 2 or 3, **characterised in that** the damping mass (16) of prismatic or cylindrical cross-section is surrounded tightly at the upper and lower end by the annular springs (20, 21).

6. Bearing according to claims 3 and 5, **characterised in that** the annular springs (20, 21) consist of two spring rings (22, 23; 30, 31) positioned approximately concentrically to one another which are connected to one another on a diameter by radial webs (24, 25; 32), wherein the inner spring rings (22; 30) are clamped to the damping mass (16) and the outer spring rings (23; 31) comprise retaining lugs (26; 33) offset 90° relative to the radial webs (24, 25; 32) for accommodating the supports (27; 34) to the shoulder (28).

7. Bearing according to claim 6, **characterised in that** the radial centre points of the two outer spring ring halves (23; 31) lie slightly outside the centre point of the inner spring rings (22; 30).

8. Bearing according to claim 6 or 7, **characterised in that** the two ring springs (20, 21) are arranged offset 90° to one another with respect to their supports.

9. Bearing according to claim 1, **characterised in that** the damping mass (16) bears on its upper front end a beam-shaped additional mass (35) which projects beyond the damping mass (16) laterally, and that the additional mass (35) is provided on the underside of the projecting ends (36, 37) with rubber cushions (38, 39) as a movement stop against the top side of the shoulder (28).

10. Bearing according to claim 1, **characterised in that** the permanent magnet (13) possesses on its top side an annular gap (14) into which the coil (15) fits.

## Revendications

1. Support élastique actif pour isoler un ensemble soumis à des oscillations, en particulier un moteur à combustion interne d'un véhicule automobile, qui comprend un système actif de découplage muni d'une masse d'amortissement d'oscillations à hautes fréquences et pouvant en fonction de paramètres de fonctionnement, être détectés par un capteur, être mis électrodynamiquement en oscillations, caractérisé en ce que le système de découplage (10) est monté du côté isolé du support (1) et comporte une bobine (15) oscillant dans un champ magnétique (13) permanent, à laquelle est coupée une masse (16) d'amortissement, et en ce que, pour guider la bobine (15) exactement à la verticale, celle-ci est suspendue élastiquement par l'intermédiaire de deux systèmes à ressort (20, 21) à rigidité radiale, qui s'étendent transversalement à la bobine (15) et parallèlement l'un à l'autre.

2. Support selon la revendication 1, caractérisé en ce que la masse d'amortissement (16) est raccordée directement à la bobine (15), la masse d'amortissement (16), qui s'étend verticalement et radialement, étant entourée dans deux plans à distance l'un de l'autre, respectivement, de systèmes (20, 21) à ressort qui autorisent un mouvement vertical, et qui s'appuient sur une butée rigide (28) du système de découplage (10).

3. Support selon la revendication 1 ou 2, caractérisé en ce que les systèmes à ressort sont constitués de ressorts à bagues.

4. Support selon la revendication 1 ou 2, caractérisé en ce que les systèmes à ressort sont constitués de membranes rigides dans les directions radiales.

5. Support selon la revendication 2 ou 3, caractérisé en ce que la masse d'amortissement (16) de section transversale prismatique ou cylindrique est entourée étroitement aux extrémités supérieure et inférieure par les ressorts à bagues (20, 21).

6. Support selon la revendication 3 ou 5, caractérisé en ce que les ressorts à bagues (20, 21) sont constitués de deux bagues formant ressort (22, 23; 30, 31) approximativement concentriques, qui sont reliées l'une à l'autre le long d'un diamètre par des entretoises (24,25; 32) radiales, les bagues à ressort (22, 30) intérieures étant fixées à la masse d'amortissement (16) et les bagues à ressort (23; 31) extérieures comportant, à 90° de l'entretoise radiale (24, 25, 32), des oeillets de fixation (26, 33) de réception des appuis sur la butée (28).

7. Support selon la revendication 6, caractérisé en ce que les centres des deux demi-bagues (23, 31) à ressort extérieures sont un peu à côté du centre des bagues (22, 30) élastiques intérieures.

8. Support selon la revendication 6 ou 7, caractérisé en ce que les appuis des deux ressorts à bagues (20, 21) sont disposés à 90° l'un de l'autre.

9. Support selon la revendication 1, caractérisé en ce que la masse d'amortissement (16) porte sur son côté frontal supérieur une masse (35) supplémentaire en forme de poutre, laquelle dépasse sur les côtés de la masse (16) d'amortissement, et en ce que la masse (35) supplémentaire est munie sur la surface inférieure des extrémités (36, 37) qui dépassent de rembourrages (38, 39) en caoutchouc servant à arrêter le mouvement contre la face supérieure de la butée (28).

10. Support selon la revendication 1, caractérisé en ce que l'aimant permanent (13) comprend sur son côté supérieur une fente (14) annulaire dans laquelle plonge la bobine (15).
